# FASCICULE DE BREVET EUROPEEN

(11) **EP 1 395 962 B1**
(45) Date de publication et mention de la délivrance du brevet: **12.09.2007**
(21) Numéro de dépôt: 02727708.6
(22) Date de dépôt: 15.05.2002
(51) Int. Cl.: G07F 7/10

(54) **DEPLOIEMENT D'APPLICATION DEPUIS UNE CARTE A PUCE**
AUSLÖSUNG EINER ANWENDUNG AUF EINER CHIPKARTE
APPLICATION DEPLOYMENT FORM A SMART CARD

(30) Priorité: 18.05.2001 FR 0106606
(43) Date de publication de la demande: 10.03.2004
(73) Titulaire: GEMPLUS, 13420 Gémenos (FR)
(72) Inventeur: POTONNIEE, Olivier, F-13006 MARSEILLE (FR); PELLEGRINI, Marie-Claude, F-71130 CHASSY (FR)
(86) Numéro de dépôt international: PCT/FR2002/001635
(87) Numéro de publication internationale: WO 2002/095697

(56) Documents cités:
- EP-A- 0 866 612
- EP-A- 1 039 719
- WO-A-00/34891
- WO-A-99/07007
- US-A- 5 212 369
- US-A- 5 659 735

## Description

La présente invention concerne le déploiement d'une application depuis un premier moyen de traitement de données, tel qu'une carte à puce, dite également carte à microcontrôleur ou carte à circuit intégré, sur un deuxième moyen de traitement de données, tel qu'un terminal d'accueil de la carte à puce, dans un contexte étendu et hétérogène. Dans ce contexte, l'application est composée de composants logiciels dispersés dans un réseau de télécommunication et doit pouvoir être exécutée à partir de terminaux hétérogènes ayant des caractéristiques matérielles et logicielles différentes, tels qu'un terminal radiotéléphone mobile, un assistant électronique personnel et un ordinateur personnel. Les terminaux hétérogènes diffèrent par exemple par leurs systèmes d'exploitation et leurs caractéristiques de codage de données et de communication.

Actuellement, des utilisateurs accèdent à diverses applications à travers des réseaux de télécommunication, notamment le réseau Internet, quasiment à l'aide de n'importe quel terminal parmi divers terminaux hétérogènes, depuis leurs bureaux, leurs domiciles, ou des bornes d'accès publiques. Malheureusement, les applications ne sont pas capables de se configurer automatiquement en fonction de caractéristiques personnelles à l'utilisateur et il est nécessaire de reconfigurer le terminal de l'utilisateur en fonction de l'application choisie. Pour exécuter correctement les applications, le terminal doit disposer de données de service relatives à l'application à exécuter et aux serveurs distants offrant ces applications, et de données individuelles confidentielles, propres à chaque utilisateur et personnalisant l'accès à une ou plusieurs applications. Lorsque les utilisateurs sont sédentaires ces informations sont généralement statiques sur leurs terminaux. En revanche, lorsque les utilisateurs sont itinérants, la carte à puce offre un support autonome, sûr et portable pour fournir ces données aux terminaux que l'utilisateur est susceptible d'avoir besoin.

Par ailleurs, les fournisseurs d'applications ont intérêt à ce que leurs applications soient utilisables depuis un très grand nombre de types de terminaux. Une application doit donc être capable de s'adapter au terminal dans lequel elle est exécutée. Par exemple, une application donnée présente une interface graphique complexe à base de fenêtres dans un ordinateur personnel, et de simples menus textuels dans un radiotéléphone mobile, ou établit une communication audio ou vidéo en fonction du débit offert par le réseau et le terminal.

L'adaptabilité des applications distribuées à leur contexte d'exécution et aux besoins de l'utilisateur devient ainsi une nécessité (cf. article intitulé "Adaptabilité des applications pour des utilisateurs mobiles", Michel RIVEILL et al., OCM'2000, Objets Composants Modèles, 8 Mai 2000). Il est donc nécessaire de déployer des applications de service en fonction du type du terminal et d'une personnalisation de configuration pour l'utilisateur. Cette souplesse requise est obtenue par une architecture modulaire de chaque application. Chaque application est conçue comme un graphe de composants interconnectés par des connexions. Le déploiement de l'application sur un terminal crée dans celui-ci des instances de ces composants en fonction du contexte d'exécution et de caractéristiques personnelles.

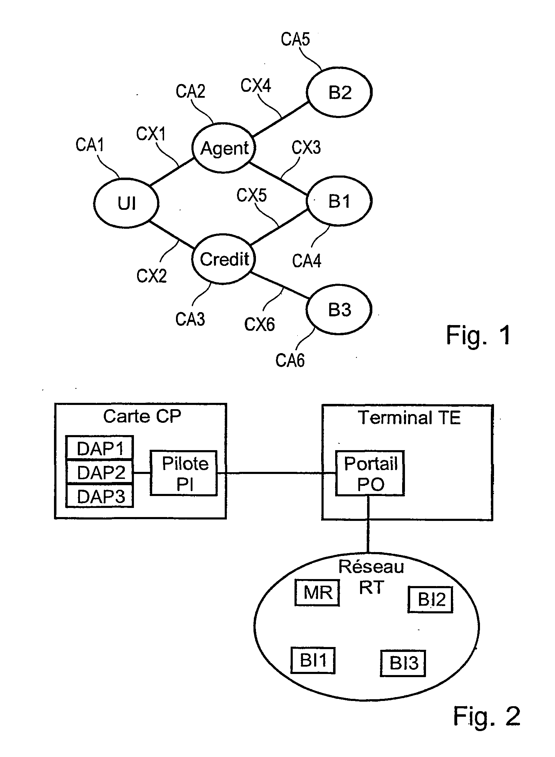

Comme montré aux figures 1 et 2, il est connu de définir une application dans une carte à puce CP, ou tout autre objet électronique portable présentant une capacité de mémoire relativement faible, par un descripteur DAP d'une application AP identifiant des éléments essentiels de l'application, tels que les composants logiciels CA de l'application et des connexions CX entre ces composants deux à deux. En général, une application comprend au moins trois composants CA1, CA2 et CA3 et au moins deux connexions CX1 et CX2 interconnectant deux à deux les composants CA1 à CA3.

Un composant CA est une unité de traitement logiciel encapsulant des fonctionnalités, assez petite pour que l'on puisse la créer et la maintenir, et assez grande pour que l'on puisse l'installer et en assurer le support. Le composant est doté d'interfaces de communication pour qu'il puisse coopérer avec d'autres composants et ainsi présenter son comportement à ces autres composants. En pratique, un composant logiciel peut être implanté sur n'importe quel site d'un réseau de transmission RT.

Une connexion définit les relations entre les interfaces de communication de deux composants. Des paramètres des connexions de l'application sont également adaptés au contexte de la plate-forme d'exécution.

Au niveau de la carte à puce CP, un descripteur d'application DAP ne contient pas l'élément lui-même (composant logiciel CA ou connexion CX), mais un descripteur DCA, DCX de l'élément CA, CX contenant des propriétés et des paramètres de l'élément le définissant et permettant de le retrouver parmi une multitude d'éléments.

Les propriétés du descripteur d'un élément sont fixées une fois pour toutes par le fournisseur de l'application qui spécialise l'élément, composant ou connexion, afin de satisfaire les besoins de l'application et de l'utilisateur selon des caractéristiques d'abonnement par exemple. Elles indiquent les caractéristiques de la plate-forme sur laquelle l'élément peut être exécuté, ainsi que les besoins systèmes nécessaires à son exécution. Une propriété peut consister en un type ou une adresse d'élément, qui est associé à chaque élément et utilisé pour la recherche du code ou de l'implantation de l'élément, ou est intimement liée à l'application ou à un type d'application. Par exemple, la propriété "numéro de compte" est associée à un composant gestionnaire de compte bancaire. Ces propriétés sont, selon la technique antérieure, figées lors de la souscription au service correspondant à l'application par l'utilisateur de la carte à puce, et ne sont accessibles qu'en lecture seule.

D'autres propriétés, dites paramètres, sont de préférence personnalisées par l'utilisateur et peuvent être modifiées à tout instant. Par exemple, un paramètre définit la monnaie d'affichage d'un montant, ou bien une panoplie de couleurs pour l'affichage de pages sur un écran, ou bien encore la valeur du débit ou d'une caractéristique de transmission dans une connexion.

Chaque descripteur d'application est représenté sous la forme d'un graphe d'objet en langage orienté objet, par exemple le langage JAVA (marque déposée) ou le langage XML (Extensible Markup Langage).

Les descripteurs d'application DAP1, DAP2, DAP3 dans une carte à puce multi-applications sont associés au pilote de déploiement PI (en anglais bootstrap) qui constitue au sein de la carte à puce CP une application permettant de sélectionner une application, la configurer et la déployer en fonction de son descripteur, après introduction de la carte CP dans le terminal d'accueil TE. En groupant les descripteurs d'application et le pilote de déploiement dans la carte, la confidentialité des descripteurs est assurée, si bien que la lecture des descripteurs par le pilote de déploiement ne nécessite pas d'authentification. En revanche, le pilote de déploiement authentifie chaque client qui l'interroge avant de mettre à sa disposition l'ensemble des descripteurs d'application mémorisés dans la carte. Le pilote PI peut ainsi traiter un ou plusieurs déploiements d'application.

Comme déjà dit, un élément d'application, composant ou connexion, est configuré en fonction du contexte de l'application, c'est-à-dire des propriétés matérielles et logicielles de la plate-forme où sera exécutée l'application, et de paramètres choisis par l'utilisateur et personnalisant l'application. Toutes ces informations sont regroupées dans le descripteur de l'élément d'application afin que le pilote de déploiement PI filtre les informations contenues dans le descripteur de l'élément en fonction du contexte de l'application et des paramètres de personnalisation de l'utilisateur.

Le pilote de déploiement PI localisé dans la carte à puce CP transmet des commandes de déploiement à un portail de déploiement PO qui est un élément applicatif implémenté dans le terminal d'accueil TE. Le portail a pour principal rôle de recevoir les commandes de déploiement et de les ré-émettre vers la plate-forme d'exécution afin d'installer l'application sélectionnée. Ainsi le portail de déploiement a principalement une fonction d'information de la carte à puce sur l'environnement dans lequel l'installation et l'exécution de l'application sélectionnée doivent être faites, et une fonction de communication avec la carte afin de recevoir diverses commandes de déploiement de l'application sélectionnée.

Selon la technique antérieure, le déploiement d'une application est synchrone, c'est-à-dire les commandes élaborées par le pilote de déploiement PI sont transmises séquentiellement, les unes après les autres, respectivement pour l'installation des éléments de l'application, puis pour le paramètrage des éléments de l'application, chaque commande devant être acquittée par le portail de déploiement PO sur le terminal avant que la commande suivante soit émise par le pilote PI.

Finalement, lorsque tous les composants et les connexions de l'application sélectionnée AP sont installés et paramétrés, l'application ainsi déployée se trouve adaptée au terminal TE et peut alors être exécutée. Le démarrage de l'application est effectué par une commande d'exécution (RUN) qui contient le nom du composant de l'application sélectionnée déterminant le point d'entrée de l'application, généralement un composant d'interface d'utilisateur.

Il s'avère qu'un tel déploiement synchrone présente l'inconvénient de rendre l'installation d'une application longue, à cause de la succession de commandes qui doivent être acquittées selon un ordonnancement prédéterminé. Cette installation est d'autant plus longue que le nombre de composants à installer est élevé et que l'installation de ces derniers nécessite de faire appel aux ressources du réseau de transmission RT. Ce temps pendant lequel l'utilisateur attend peut être un facteur de rejet d'une application lorsqu'il est trop important.

Pour tenter de remédier à cet inconvénient, on a proposé d'effectuer le déploiement d'une application de manière asynchrone, c'est-à-dire que le pilote PI demande l'installation en parallèle de tous les composants de l'application, indépendants d'autres composants, sans attendre un acquittement du portail PO, puis commande en parallèle, l'installation d'éléments dépendants en réponse respectivement à l'acquittement de l'installation des éléments dont ils dépendent. Le paramétrage des éléments peut également être effectué de manière asynchrone. Dans le cas d'un système mono processeur, l'exécution en parallèle de plusieurs traitements signifie simplement que plusieurs traitements peuvent être en cours d'exécution simultanément, les ressources du processeur étant, bien entendu, attribuées à un seul traitement à un instant donné.
Cette solution permet d'optimiser l'utilisation de la puissance de traitement et le débit de transmission, offerts par le terminal et le réseau de transmission. Toutefois, en particulier lorsque l'application à installer comprend de nombreux composants et que le terminal de déploiement présente une faible capacité de traitement, le déploiement asynchrone ne permet pas de réduire de manière significative le temps d'attente de l'utilisateur, avant que l'application soit lancée.

Dans les deux cas précédents, tous les composants de l'application sont installés, même ceux que l'utilisateur utilise rarement ou jamais, ce qui augmente inutilement le temps d'installation de l'application et surcharge inutilement les ressources du terminal.

La présente invention a pour objectif de remédier aux inconvénients précités du déploiement des applications à éléments répartis selon la technique antérieure, et à réduire encore le délai d'installation.

Cet objectif est atteint par la prévision d'un procédé pour déployer une application composée de plusieurs éléments distants répartis, depuis un premier moyen de traitement de données contenant des descripteurs desdits éléments, sur un second moyen de traitement de données relié à des moyens d'implantation des éléments, pour exécuter l'application une fois déployée, caractérisé en ce qu'il comporte au moins les étapes consistant à :
- sélectionner au moins un élément de l'application en tant qu'élément prioritaire,
- déployer sur le second moyen de traitement le ou les éléments prioritaires, et
- exécuter l'application par le second moyen de traitement dès que le ou les éléments prioritaires ont été déployés.

Grâce à ces dispositions, le temps d'attente de l'utilisateur se trouve considérablement diminué, puisque le déploiement effectué avant le lancement de l'application concerne un nombre réduit de composants. En outre, si seuls les composants utilisés sont installés, la carte ne présente pas au terminal les descripteurs des éléments non installés, et les ressources du terminal ne sont pas surchargées par des éléments inutiles.

Avantageusement, l'étape de sélection d'au moins un élément de l'application en tant qu'élément prioritaire consiste à examiner au moins un indicateur de priorité contenu dans le descripteur de la dite application.

Selon une particularité de l'invention, si au cours de l'exécution de l'application par le second moyen de traitement de données, un élément non déployé est appelé, le procédé comprend en outre une étape de déploiement de l'élément appelé, puis une étape de poursuite de l'exécution de l'application.

Selon une autre particularité de l'invention, les éléments de l'application non sélectionnés en tant qu'éléments prioritaires sont déployés sur le second moyen de traitement de données en parallèle de l'exécution de l'application.

Selon encore une autre particularité de l'invention, le procédé comprend en outre une étape de transmission du contexte d'exécution de l'application depuis le second moyen de traitement de données vers le premier moyen de traitement de données, le déploiement en parallèle de l'exécution de l'application, des éléments de l'application non sélectionnés en tant qu'éléments prioritaires, étant réalisé en fonction du contexte d'exécution transmis.

De préférence, les éléments de l'application non sélectionnés en tant qu'éléments prioritaires, sont déployés sur le second moyen de traitement en parallèle de l'exécution de l'application, d'une manière synchrone.

Alternativement, les éléments de l'application non sélectionnés en tant qu'éléments prioritaires, sont déployés sur le second moyen de traitement en parallèle de l'exécution de l'application, d'une manière asynchrone.

Selon encore une autre particularité de l'invention, le procédé comprend en outre une étape de sélection d'au moins un élément de l'application en tant qu'élément non prioritaire, les éléments non prioritaires de l'application étant déployés sur le second moyen de traitement uniquement s'ils sont appelés au cours de l'exécution de l'application.

Avantageusement, en fin d'exécution de l'application, le procédé selon l'invention comprend en outre une étape de mise à jour des indicateurs de priorité respectifs des éléments de l'application en fonction des éléments qui ont été utilisés durant l'exécution de l'application.

L'invention concerne également un objet électronique comprenant un moyen de description pour décrire une application composée de plusieurs éléments distants répartis, et un moyen de traitement pour déployer l'application en vue de son exécution à l'extérieur de l'objet électronique, en fonction du moyen de description de l'application,
caractérisé en ce que le moyen de description comporte au moins un indicateur de priorité pour sélectionner au moins un élement en tant qu'élément prioritaire de l'application, et en ce que le moyen pour déployer l'application ne déploie que les éléments prioritaires avant d'autoriser l'exécution de l'application.

Cet objet est par exemple de type carte à microcontrôleur.

L'invention concerne aussi un système de déploiement d'application comprenant un objet électronique portable du type carte à microcontrôleur, un terminal connecté à un réseau de transmission de données et comportant un moyen pour communiquer avec l'objet électronique portable, l'objet électronique portable comprenant un moyen de description pour décrire une application composée de plusieurs éléments distants répartis accessibles au terminal par le réseau de transmission de données, et un moyen de traitement pour déployer l'application sur le terminal en vue de son exécution par le terminal, en fonction du moyen de description de l'application,
caractérisé en ce que le moyen de description comporte au moins un indicateur de priorité pour sélectionner au moins un élement en tant qu'élément prioritaire de l'application, et en ce que le moyen pour déployer l'application ne déploie que les éléments prioritaires avant de déclencher l'exécution de l'application déployée sur le terminal.

D'autres caractéristiques et avantages de la présente invention apparaîtront plus clairement à la lecture de la description suivante de plusieurs réalisations préférées de l'invention en référence aux dessins annexés correspondants dans lesquels:
- la figure 1 représente schématiquement une application modulaire comprenant six composants ;
- la figure 2 est un bloc-diagramme schématique des moyens mis en oeuvre dans un réseau de télécommunication pour le déploiement d'une application constituée d'éléments distants répartis;
- la figure 3 est un algorithme de déploiement et d'exécution d'une application, selon l'invention ; et
- les figures 4 et 5 sont des algorithmes montrant plus en détail certaines étapes de l'algorithme représenté sur la figure 3.

La figure 1 représente une application de services bancaires accessibles par un réseau de transmission de données tel quel le réseau Internet. Cette application comprend un composant principal CA1 dans lequel sont rassemblées toutes les fonctions d'interface UI avec l'utilisateur, ce composant permet d'accéder à un service générique de gestion de comptes bancaires intégré dans un composant CA2 et à un service générique de demande de crédit CA3. A cet effet, le composant CA1 est relié aux composants CA2 et CA3 par les connexions respectives CX1 et CX2. Dans l'application particulière mise à la disposition de l'utilisateur, représentée sur la figure 1, le composant CA2 de gestion de comptes bancaires est relié par les connexions CX3 et CX4 respectivement aux serveurs de deux organismes bancaires B1 et B2 intégrés dans les composants CA4 et CA5, ce qui signifie que l'utilisateur peut accéder à des comptes bancaires gérés uniquement par les organismes bancaires B1 et B2. D'une manière analogue, le composant CA3 est relié par les connexions CX5 et CX6 respectivement aux serveurs de deux organismes bancaires B 1 et B3.

Tous les éléments d'une telle application ne doivent pas nécessairement être installés sur le terminal d'exécution de l'application. Ainsi dans l'exemple présenté, les services offerts par les serveurs d'organismes bancaires, en-cours d'exécution sur des sites distants, sont interrogés à la demande par le terminal d'exécution de l'application. A cet effet, le lien entre les composants CA2 et CA3, d'une part et les composants CA4 à CA6 d'autre part est réalisé par les connecteurs CX3 à CX6 qui utilisent le réseau en implémentant un protocole de communication adéquat.

Une telle application peut être décrite par un descripteur d'application ayant la forme suivante, exprimée dans le langage XML :

```
 <Application Name="Banking">
   <Component Name="ui" Type="banking.AccountServiceUIObject"
     Runnable="y">
        <Property Name="deploymentUrgency">
              <Value Value="100"/>
        </Property>
        ...
   </Component>
   <Component Name="B1" Type="banking.BankObject">
        <Property Name="deploymentUrgency">
              <Value Value="70"/>
        </Property>
        ...
   </Component>
   <Component Name="B2" Type="banking.BankObject">
        <Property Name="deploymentUrgency">
              <Value Value="50"/>
        </Property>
        ...
   </Component>
   <Component Name="B3" Type="banking.BankObject">
        <Property Name="deploymentUrgency">
              <Value Value="5"/>
        </Property>
        ...
   </Component>
   <Component Name="Agent" Type="banking.AccountServiceObject">
        <Property Name="deploymentUrgency">
              <Value Value="70"/>
        </Property>
        ...
   </Component>
   <Component Name="Credit" Type="banking.CreditServiceObject">
        <Property Name="deploymentUrgency">
              <Value Value="8"/>
        </Property>
        ...
   </Component>
   <Connection Name="Agent_B1"
              UserComponent="Agent" UserInterface="accounts"
              ProviderComponent="B1" Providerlnterface="accounts">
       <Property Name=deploymentUrgency">
              <Value Value="69"/>
       </Property>
        ...
   </Connection>
   <Connection Name="Agent_B2"
              UserComponent="Agent" UserInterface="accounts"
              ProviderComponent="B2" ProviderInterface="accounts">
       <Property Name=deploymentUrgency">
              <Value Value="39"/>
       </Property>
        ...
   </Connection>
   <Connection Name="UI_Agent"
           UserComponent="ui" UserInterface="accounts"
           ProviderComponent="Agent" ProviderInterface="accounts">
       <Property Name=deploymentUrgency">
              <Value Value="69"/>
       </Property>
        ...
   </Connection>
   <Connection Name="Credit_B1" "
              UserComponent="Credit" UserInterface="accounts"
              ProviderComponent="B1" ProviderInterface="accounts">
       <Property Name=deploymentUrgency">
              <Value Value="2"/>
       </Property>
        ...
   </Connection>
   <Connection Name="Credit_B3"
              UserComponent="Credit" UserInterface="accounts"
              ProviderComponent="B3" ProviderInterface="accounts">
       <Property Name=deploymentUrgency">
              <Value Value="4"/>
       </Property>
        ...
   </Connection>
 </Application>
```

Cette syntaxe représente à l'aide de balises de début et de fin de champ "<XXX>" et "</XXX>" une structure hiérarchique d'éléments imbriqués les uns dans les autres. Elle donne en particulier la liste des descripteurs d'éléments (composants logiciels et connexions) faisant partie de l'application, chaque descripteur d'élément comprenant notamment une liste de propriétés.

Comme décrit ci-avant, un tel descripteur d'application est stocké dans un premier moyen de traitement tel qu'une carte à puce CP, laquelle peut stocker plusieurs descripteurs d'application DAP1, DAP2, DAP3, s'il s'agit d'une carte multi-applications. Une telle carte est destinée à être lue par un lecteur de carte couplé à un second moyen de traitement tel qu'un terminal TE dans lequel on souhaite déployer une application. Le déploiement d'une application à partir d'une telle carte est géré par le pilote de déploiement PI intégré dans la carte à puce CP, qui lorsque la carte est lue par le lecteur d'un terminal TE, communique avec un logiciel appelé portail de déploiement PO prévu sur le terminal.

Le déploiement est donc réalisé par le pilote PI de déploiement à partir du descripteur DAP de l'application sélectionnée, en établissant un dialogue avec le portail de déploiement PO dans le terminal d'accueil TE. Le portail peut contenir un moteur de recherche d'éléments, ou être en liaison avec un ou plusieurs moteurs de recherche d'éléments MR, comme montré à la figure 2. Chaque moteur de recherche MR a accès à des bibliothèques d'éléments d'application BI1, BI2, BI3, à travers le réseau de transmission RT. Chaque élément dans une bibliothèque est mémorisé avec son descripteur et géré par le concepteur de l'élément. Le réseau de transmission RT peut être un réseau public ou privé, de type téléphonique câblé ou cellulaire, ou encore de type réseau d'ordinateurs tel que le réseau Internet.

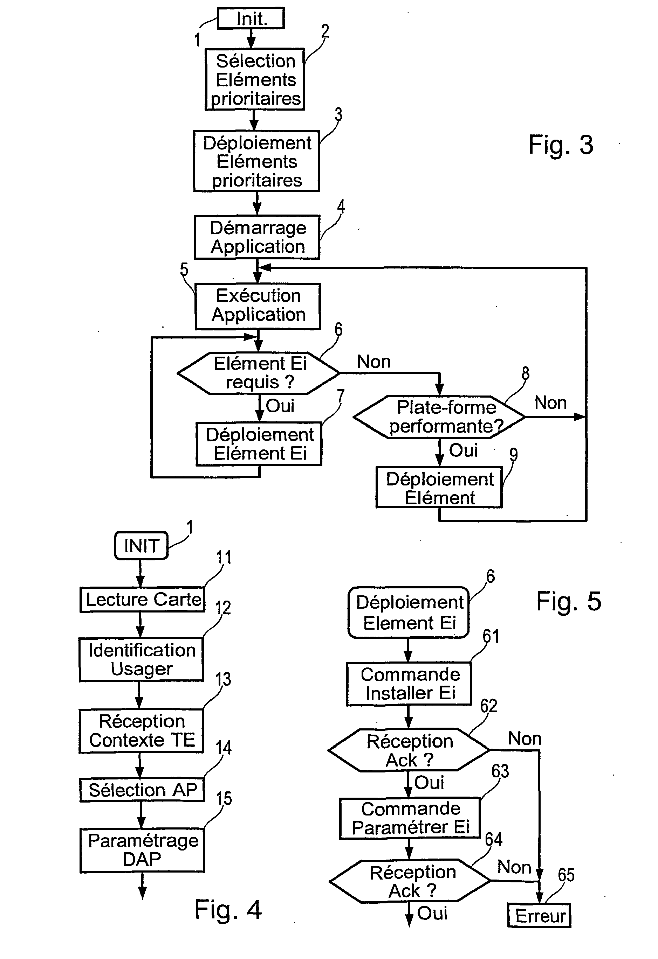

Tel que représenté sur les figures 3 et 4, le déploiement proprement dit d'une application sélectionnée, est précédé d'une phase d'initialisation 1 au cours de laquelle l'utilisateur introduit la carte à puce CP dans la fente de lecteur du terminal d'accueil TE. Après l'introduction de la carte à puce, celle-ci dialogue 11 avec le terminal d'accueil pour authentifier 12 l'utilisateur, connaître 13 le contexte de la plate-forme d'exécution de l'application constituée essentiellement par le terminal TE, et l'application sélectionnée 14.

L'authentification consiste par exemple à vérifier l'identité de l'utilisateur au moyen d'un code confidentiel PIN saisi par le terminal.

Le contexte extérieur à l'environnement matériel de la carte à puce est défini par des propriétés de la plate-forme d'exécution qui sont transmises par le terminal TE à la carte à puce CP. Les propriétés du contexte d'exécution fournies par le terminal sont par exemple le type du terminal d'accueil utilisé TE, le nom du terminal, un certificat ou clé d'identification du terminal, et la localisation géographique du terminal dans le réseau de télécommunication. Ces propriétés permettent au pilote de déploiement PI de limiter la quantité de données qu'il transmet au portail de déploiement PO et ainsi de minimiser la durée du déploiement. Lors d'un déploiement ultérieur, ces références aux propriétés contextuelles sont remplacées par les valeurs fournies par un autre terminal d'accueil TE.

L'utilisateur sélectionne une application AP, classiquement par exemple dans un menu de présentation de diverses applications dont les déploiements peuvent être commandés par la carte à puce CP. Après la sélection de l'application AP, le terminal TE, selon le contexte, et de préférence l'utilisateur paramètrent 15 l'application, c'est-à-dire paramètrent certains des ou éventuellement tous les descripteurs DCA et DCX des composants et des connexions de l'application sélectionnée qui sont susceptibles d'être paramétrés. Le paramétrage par l'utilisateur est classique à l'aide de menus arborescents demandant des valeurs de paramètre.

A la suite de ces étapes d'initialisation 1, le déploiement de l'application sélectionnée AP est exécuté en fonction des descripteurs de composant CAi et des descripteurs de connexion CXi dans le descripteur paramétré DAP de l'application sélectionnée AP.

Selon l'invention, seuls certains éléments de l'application sont définis comme étant prioritaires et doivent être chargés avant le démarrage de l'application, les autres éléments pouvant être déployés après le démarrage de l'application. Dans l'exemple de la figure 1, ces éléments sont constitués par le composant d'interface utilisateur CA1. Dans le descripteur d'application exprimé en langage XML, présenté ci-avant, la définition de la priorité de déploiement d'un élément est définie sous la forme d'une propriété associée à l'élément, appelée "deploymentUrgency" et ayant une valeur située entre 0 et 100. Par convention, on peut choisir que la valeur 100 est attribuée aux éléments prioritaires, c'est-à-dire devant être déployés avant le démarrage de l'application.

Les éléments définis comme prioritaires sont donc sélectionnés 2 comme étant des éléments à déployer, puis déployés 3.

Après le déploiement des éléments prioritaires, l'application est lancée 4 et exécutée 5. Dans l'exemple de la figure 1, seul le composant CA1 qui gère le dialogue avec l'utilisateur est déployé et activé. Il en résulte qu'après le déploiement d'un unique composant, l'utilisateur peut percevoir sur le terminal TE que l'application est activée et lui propose de choisir entre un accès aux gestionnaires de comptes bancaires et un accès à des offres de crédit.

Le déploiement des éléments prioritaires peut se dérouler de manière synchrone ou asynchrone. Toutefois, en général une application possède un unique point d'entrée contenu dans un seul composant. Par conséquent, si l'on souhaite que l'application soit activée le plus rapidement possible, seul le composant contenant le point d'entrée de l'application doit être configuré comme prioritaire pour être déployé seul avant le démarrage de l'application.

Selon un premier mode de réalisation de l'invention, les déploiements des éléments d'application non prioritaires ne sont effectués que s'ils sont demandés par l'utilisateur.

Selon un second mode de réalisation de l'invention alternatif, on définit une catégorie d'éléments de priorité moyenne qui sont déployés en tâche de fond dès que l'application est démarrée et une catégorie d'éléments non prioritaires ou de priorité basse qui ne sont déployés que s'ils sont requis par l'exécution de l'application en cours. Dans le descripteur d'application donné ci-avant, on a choisi comme convention qu'un niveau de priorité égal à 100 est attribué aux éléments prioritaires, un niveau de priorité supérieur à 10 et inférieur à 100 est attribué aux éléments de priorité moyenne, et un niveau de priorité inférieur à 10 est attribué aux éléments de priorité basse, c'est-à-dire aux éléments qui sont rarement exécutés.

Avantageusement, chaque fois qu'un élément d'une application est appelé au cours de l'exécution de l'application, un message est transmis à la carte à puce, pour l'en avertir. De son côté la carte à puce, à la réception d'un tel message, met à jour le champ valeur du niveau de priorité dans le descripteur de l'élément concerné dans le descripteur d'application. De cette manière, l'ordre dans lequel les éléments d'une application sont déployés peut être adapté aux besoins et habitudes de chaque utilisateur concernant l'exécution d'une application.

Lorsque l'utilisateur sélectionne une option de l'application en cours d'exécution, par exemple dans un menu, soit le composant réalisant la fonction choisie est déjà déployé et dans ce cas, il peut être exécuté immédiatement, soit il ne l'est pas. Dans ce dernier cas, l'environnement d'exécution de l'application du terminal TE détecte que le composant n'est pas déployé et fait une demande de déploiement du composant auprès de la carte à puce CP (étape 6) en lui fournissant par exemple le nom de l'élément à déployer. Cette demande déclenche le déploiement de l'élément (étape 7). Ici encore, le déploiement d'élément peut être synchrone ou asynchrone, c'est-à-dire que le pilote de déploiement PI attend ou non la fin du déploiement avant de retourner à l'étape 6 pour lancer un éventuel autre déploiement d'élément si d'autres éléments sont requis.

S'il existe des éléments de priorité moyenne à déployer, ceux-ci sont déployés en tâche de fond, également d'une manière synchrone ou asynchrone (étape 9). On peut prévoir que ce déploiement d'éléments de priorité moyenne soit effectué uniquement si les performances ou les capacités du terminal sont suffisantes (étape 8), ou que ces éléments soient déployés par ordre de priorité jusqu'à ce que les ressources disponibles (par exemple en terme de capacité mémoire) du terminal atteignent un seuil minimum prédéfini, ou encore, dans le cas d'un déploiement asynchrone, que le nombre de déploiement déclenchés en parallèle soit limité en fonction des ressources disponibles du terminal, de manière à ne pas ralentir d'une manière notable pour l'utilisateur l'exécution de l'application en cours.

La figure 5 illustre la manière dont le déploiement 7 d'un élément Ei est effectué. Au cours d'un tel déploiement quatre types de commandes sont émis par le pilote de déploiement PI à destination du portail de déploiement PO.

Par une première commande d'installation [INSTALLER Ei] contenant les propriétés du descripteur de l'élément, le pilote PI ordonne 61 au portail PO l'installation du composant Ei de l'application sélectionnée. En réponse à la commande d'installation, le portail PO commande une recherche de l'élément désigné Ei s'il s'agit d'un composant, à travers au moins un moteur de recherche MR dans une bibliothèque BI de composants, de manière à récupérer une instance du composant dans le terminal TE, ou une référence distante de ce composant. Après complète exécution de la commande d'installation, l'installation de l'élément est confirmée 62 par un message d'acquittement [ACK (INSTALLER Ei)] transmis par le portail PO au pilote PI. Le pilote PI émet 63 ensuite au portail PO une seconde commande [PARAMETRER Ei], contenant les paramètres de configuration de l'élément Ei, pour paramétrer l'élément installé. Le paramétrage de l'élément Ei est effectué en fonction de certains paramètres contenus dans le descripteur de l'élément et dépend du contexte d'exécution de l'application et éventuellement de sélections de l'utilisateur, définis durant le déploiement. Une fois le paramétrage de l'élément effectué par le portail PO, ce dernier transmet 64 au pilote PI un message d'acquittement [ACK(PARAMETRER Ei)]. Si aux étapes 62 et 64, le portail PO n'a pas répondu par un acquittement avant la fin d'une temporisation prédéterminée, un message d'erreur est transmis 65 par le pilote PI au terminal TE pour signaler que le déploiement de l'élément n'a pas pu être effectué.

Dans le cas où plusieurs éléments sont déployés de manière asynchrone, ils doivent bien entendu être indépendants les uns des autres, sachant qu'un élément dépendant d'autres éléments ne peut pas être déployé tant que les éléments dont il dépend ne sont pas déployés sur le terminal.

Dans l'exemple de la figure 1 et selon le descripteur d'application correspondant donné ci-avant, seul le composant d'interface utilisateur CA1 est prioritaire (priorité égale à 100) et est déployé avant l'exécution de l'application sur le terminal. Ensuite, en tâche de fond ou parce que l'utilisateur l'a demandé, le composant d'agent bancaire CA2 qui a la priorité moyenne la plus élevée (70) est installé, ainsi que le composant CA4 qui a la même priorité. Le déploiement de ces deux composants peut être effectué de manière asynchrone, c'est-à-dire sensiblement en parallèle, ces deux éléments étant indépendants l'un de l'autre et ne dépendant pas d'autres éléments. Le déploiement du composant CA5 peut également être lancé puisqu'il est indépendant des autres éléments de l'application, même s'il possède un niveau de priorité de 50 inférieure à celui d'autres éléments non encore déployés comme les connexions CX1 et CX3. Toutefois, ce déploiement peut ne pas être effectué si par exemple il est conditionné par les performances du terminal. Ensuite, une fois que les composants CA2 et CA4 sont déployés, les connexions CX1 entre l'interface utilisateur CA1 et l'agent CA2, et CX3 entre l'agent et le serveur bancaire B1, lesquels ont la priorité moyenne la plus élevée suivante 69, peuvent être déployés en parallèle. La connexion CX4 entre les composants CA2 et CA5 peut être installée à la suite du composant CA5. Les autres éléments, c'est-à-dire CA3, CA6 et CX6 ayant une priorité inférieure à 10 ne sont installés que si l'utilisateur les demande.

Selon une variante préférée de l'invention, les éléments utilisés durant l'exécution de l'application sont marqués et à la fin d'exécution de l'application, le terminal TE transmet à la carte à puce la référence des éléments ainsi marqués. A la suite de cette transmission, la carte à puce met à jour les indicateurs de priorité de tous les éléments de l'application en fonction des éléments qui ont ainsi été utilisés. Les indicateurs de priorité des éléments de l'application peuvent ainsi être modifiés dans certaines limites. Par exemple, les indicateurs de priorité des éléments utilisés sont augmentés, tandis que les éléments non utilisés sont diminués.

## Revendications

1. Procédé pour installer et exécuter une application composée de plusieurs éléments distants répartis (CA, CX), depuis un premier moyen de traitement de données (CP, PI) contenant des descripteurs desdits éléments, sur un second moyen de traitement de données (TE) relié à des moyens d'implantation (MR, BI) des éléments, et exécuter l'application une fois installée,
**caractérisé** cn ce qu'il comporte au moins les étapes consistant à :
- sélectionner (2) au moins un élément (CA1) de l'application en tant qu'élément prioritaire grâce à l'examen d'au moins un indicateur de priorité contenu dans le descripteur (DAP) de ladite application et généré à l'aide de données personnelles à l'utilisateur.
- installer (3) sur le second moyen de traitement (TE) le ou les éléments prioritaires (CA1), et
- exécuter (5) l'application par le second moyen de traitement (TE) dès que le ou les éléments prioritaires ont été installés,

2. Procédé selon la revendication 1,
**caractérisé en ce que** l'étape d'exécuter (5) l'application par le second moyen de traitement (TE) dès que le ou les éléments prioritaires ont été installés est concomitante de l'étape de installer (9) sur le second moyen de traitement (TE) en parallèle de l'exécution (5) de l'application, d'une manière asynchrone, les éléments (CA2, CA4) de l'application non sélectionnés en tant qu'éléments prioritaires.

3. Procédé selon la revendication 1 ou 2,
**caractérisé en ce que** si au cours de l'exécution de l'application par le second moyen de traitement de données (TE), un élément (CA2, CA3) non encore installé est appelé, il comprend une étape (7) d'installation de l'élément appelé, puis une étape (5) de poursuite de l'exécution de l'application

4. Procédé selon la revendication 2 ou 3,
**caractérisé en ce qu'**il comprend en outre une étape (13) de transmission du contexte d'exécution de l'application depuis le second moyen de traitement (TE) de données vers le premier moyen de traitement de données (CP), et **en ce que** l'installation (9) en parallèle de l'exécution de l'application, des éléments (CA2, CA4) de l'application non sélectionnés en tant qu'éléments prioritaires, est réalisé en fonction du contexte d'exécution transmis.

5. Procédé selon l'une quelconque des revendications 1 à 4,
**caractérisé en ce qu'**il comprend en outre une étape de sélection d'au moins un élément (CA3, CA6) de l'application en tant qu'élément non prioritaire, les éléments non prioritaires de l'application étant installés (7) sur le second moyen de traitement (TE) uniquement s'ils sont appelés au cours de l'exécution (5) de l'application.

6. Procédé selon l'une quelconque des revendications 1 à 5,
**caractérisé en ce qu'**en fin d'exécution (5) de l'application, il comprend en outre une étape de mise à jour des indicateurs de priorité respectifs des éléments (CA) de l'application en fonction des éléments (CA) qui ont été utilisés durant l'exécution de l'application.

7. Objet électronique (CP) comprenant un moyen de description (DAP) pour décrire une application (AP) composée de plusieurs éléments distants répartis (CA, CX), et un moyen de traitement (PI) pour installer l'application en vue de son exécution à l'extérieur (TE) de l'objet électronique, en fonction du moyen de description de l'application,
**caractérisé en ce que** le moyen de description (DAP) comporte au moins un indicateur de priorité pour sélectionner au moins un élement (CA1) en tant qu'élément prioritaire de l'application, et **en ce que** le moyen pour installer l'application n'installe que les éléments prioritaires avant d'autoriser l'exécution de l'application.

8. Objet électronique selon la revendication 7,
**caractérisé en ce que** les éléments (CA2, CA4) de l'application non sélectionnés en tant qu'éléments prioritaires sont installés d'une manière asynchrone (9) sur le second moyen de traitement (TE) en parallèle de l'exécution (5) de l'application.

9. Objet électronique selon la revendication 7 ou 8,
**caractérisé en ce qu'**il est de type carte à microcontrôleur.

10. Système d'installation et d'exécution d'application comprenant un objet électronique portable (CP) du type carte à microcontrôleur, un terminal (TE) connecté à un réseau de transmission de données (RT) et comportant un moyen pour communiquer avec l'objet électronique portable (CP), l'objet électronique portable comprenant un moyen de description (DAP) pour décrire une application (AP) composée de plusieurs éléments distants répartis (CA, CX) accessibles au terminal par le réseau de transmission de données (RT), et un moyen de traitement (PI) pour installer l'application sur le terminal (TE) en vue de son exécution par le terminal, en fonction du moyen de description de l'application,
**caractérisé en ce que** le moyen de description (DAP) comporte au moins un indicateur de priorité contenu dans le descripteur (DAP) de ladite application et généré à l'aide de données personnelles à l'utilisateur pour sélectionner au moins un élement en tant qu'élément prioritaire de l'application, et **en ce que** le moyen pour installer l'application ne déploie que les éléments prioritaires avant de déclencher l'exécution de l'application installée sur le terminal (TE).

## Claims

1. A method of installing and executing an application made up of a plurality of distributed remote elements (CA, CX), the method consisting in installing the application from first data processing means (CP, PI) containing descriptors of said elements, onto second data processing means (TE) connected to location means (MR, BI), for locating the elements, and in executing the application once it has been installed;
said method being **characterized in that** it comprises at least the following steps consisting in:
- selecting (2) at least one element (CA1) of the application as a priority element by means of examining at least one priority indictor contained in the descriptor (DAP) of said application and generated by means of data personal to the user;
- installing (3) the priority element(s) (CA1) onto the second processing means (TE); and
- having the second processing means (TE) execute (5) the application as soon as the priority elements have been installed.

2. A method according to claim 1, **characterized in that** the step of having the second data processing means (TE) execute (5) the application as soon as the priority elements have been installed is concomitant with the step of installing (9) the elements (CA2, CA4) of the application that are not selected as priority elements onto the second data processing means (TE) in parallel with executing (5) the application, and in asynchronous manner.

3. A method according to claim 1 or 2, **characterized in that**, if, while the application is being executed by the second data processing means (TE), an element (CA2, CA3) that is not yet installed is called up, the method further comprises a step (7) of installing the called-up element, and then a step (5) of resuming execution of the application.

4. A method according to claim 2 or 3, **characterized in that** it further comprises a step (13) of transmitting the context of execution of the application from the second data processing means (TE) to the first data processing means (CP), and **in that** the elements (CA2, CA4) of the application that are not selected as priority elements are installed (9) in parallel with execution of the application as a function of the transmitted execution context.

5. A method according to any one of claims 1 to 4, **characterized in that** it further comprises a step of selecting at least one element (CA3, CA6) of the application as a non-priority element, the non-priority elements of the application being installed (7) onto the second processing means (TE) only if they are called up during execution (5) of the application.

6. A method according to any one of claims 1 to 5, **characterized in that**, at the end of execution (5) of the application, said method further comprises a step of updating the respective priority indicators of the elements (CA) of the application as a function of the elements (CA) that have been used during execution of the application.

7. An electronic object (CP) comprising description means (DAP) for describing an application (AP) made up of a plurality of distributed remote elements (CA, CX), and processing means (PI) for installing the application with a view to subsequent execution thereof outside (TE) the electronic object, as a function of the application description means;
said electronic object being **characterized in that** the description means (DAP) comprise at least one priority indicator for selecting at least one element (CA1) as a priority element of the application, and **in that** the means for installing the application installs only the priority elements before authorizing execution of the application.

8. An electronic object according to claim 7, **characterized in that** the elements (CA2, CA4) of the application that are not selected as priority elements are installed asynchronously (9) onto the processing means (TE) in parallel with execution (5) of the application.

9. An electronic object according to claim 7 or claim 8, **characterized in that** it is of the microcontroller card type.

10. A system for installing and executing an application, said system comprising a portable electronic card (CP) of the microcontroller card type, a terminal (TE) that is connected to a data transmission network (RT) and that includes means for communicating with the portable electronic object (CP), the portable electronic object comprising description means (DAP) for describing an application (AP) made up of a plurality of distributed remote elements (CA, CX) accessible to the terminal via the data transmission network (RT), and processing means (PI) for installing the application onto the terminal (TE) with a view to it being executed by the terminal, as a function of the application description means;
said system being **characterized in that** the description means (DAP) comprise at least one priority indictor contained in the descriptor (DAP) of said application and generated by means of data personal to the user for the purpose of selecting at least one element as a priority element of the application, and **in that** the means for installing the application deploys only the priority elements before triggering execution of the application installed on the terminal (TE).

## Patentansprüche

1. Verfahren für die Installation und für die Ausführung einer aus mehreren verteilten, ausgelagerten Elementen (Ca, CX) bestehenden Applikation, ab einem ersten Datenverarbeitungsmittel (CP, PI) mit Deskriptoren der genannten Elemente, auf einem zweiten Datenverarbeitungsmittel (TE), das mit Montagemitteln (MR, BI) für die Elemente verbunden ist, um die Applikation nach ihrer Installation auszuführen, **dadurch gekennzeichnet, dass** es mindestens die folgenden Schritte umfasst:
- Wahl (2) mindestens eines Elements (CA1) der Applikation als übergeordnetes Element, dank der Prüfung mindestens eines in dem Deskriptor (DAP) der genannten Applikation enthaltenden Prioritätsindikators, und erzeugt mit.Hilfe von persönlichen Daten des Benutzers,
- Installation (3) des oder der übergeordneten Elemente (CA1) auf dem zweiten Verarbeitungsmittel (TE), und
- Ausführen (5) der Applikation durch das zweite Verarbeitungsmittel (TE) sobald das oder die übergeordneten Elemente installiert sind.

2. Verfahren gemäß Anspruch 1, **dadurch gekennzeichnet, dass** der Ausführungsschritt (5) der Applikation durch das zweite Verarbeitungsmittel (TE), sobald das oder die vereinten übergeordneten Elemente installiert sind, gleichzeitig mit dem Installationsschritt (9) auf dem zweiten Verarbeitungsmittel (TE) parallel zur Ausführung (5) der Applikation asynchron erfolgt, wobei die nicht als übergeordnet gewählten Elemente (CA2, CA4) der Applikation installiert werden.

3. Verfahren gemäß Anspruch 1 oder 2, **dadurch gekennzeichnet, dass** es, wenn während der Ausführung der Applikation durch das zweite Datenverarbeitungsmittel (TE) ein noch nicht installiertes Element (CA2, CA3) abgerufen wird, einen Installationsschritt (7) des abgerufenen Elements, und dann einen Weiterverfolgungsschritt (5) für die Ausführung der Applikation umfasst.

4. Verfahren gemäß Anspruch 2 oder 3, **dadurch gekennzeichnet**, des es ferner einen Übertragungsschritt (13) der Ausführungsumgebung der Applikation ab dem zweiten Datenverarbeitungsmittel (TE) zum ersten Datenverarbeitungsmittel (CP) umfasst, und dass die parallele Installation (9) der Ausführung der Applikation, der nicht als übergeordnet gewählten Elemente (CA2, CA4) der Applikation, gemäß der übertragenen Ausführungsumgebung realisiert wird.

5. Verfahren gemäß einem der Ansprüche 1 bis 4, **dadurch gekennzeichnet, dass** es ferner einen Wahlschritt mindestens eines Elements (CA3, CA6) der Applikation als nicht übergeordnetes Element umfasst, wobei die nicht übergeordneten Elemente der Applikation nur dann auf dem zweiten Verarbeitungsmittel (TE) installiert (7) werden, wenn sie während der Ausführung (5) der Applikation abgerufen werden.

6. Verfahren gemäß einem der Ansprüche 1 bis 5, **dadurch gekennzeichnet, dass** es am Ende der Ausführung (5) der Applikation ferner einen Aktualisierungsschritt der jeweiligen Prioritätsindikatoren der Elemente (CA) der Applikation entsprechend den Elementen (CA), die während der Ausführung der Applikation benutzt wurden, umfasst.

7. Elektronisches Objekt (CP) mit einem Beschreibungsmittel (DAP), um eine aus mehreren verteilten ausgelagerten Elementen (CA, CX) bestehende Applikation (AP) zu beschreiben, sowie einem Verarbeitungsmittel (PI), um die Applikation für ihre Ausführung außerhalb (TE) des elektronischen Objekts entsprechend dem Beschreibungsmittel der Applikation zu installieren, **dadurch gekennzeichnet, dass** das Beschreibungsmittel (DAP) mindestens einen Prioritätsindikator umfasst, um mindestens ein Element (CA1) als übergeordnetes Element der Applikation zu wählen, und dass das Mittel für die Installation der Applikation nur die übergeordneten Elemente installiert, bevor es die Ausführung der Applikation zulässt.

8. Elektronisches Objekt gemäß Anspruch 7, **dadurch gekennzeichnet, dass** die nicht übergeordneten Elemente (CA2, CA4) der Applikation asynchron (9) auf dem zweiten Verarbeitungsmittel (TE), parallel zur Ausführung (5) der Applikation installiert werden.

9. Elektronisches Objekt gemäß Anspruch 7 oder 8, **dadurch gekennzeichnet, dass** es sich beispielsweise um eine Mikrocontrollerkarte handelt.

10. Applikationsinstallations- und Ausführungssystem mit einem tragbaren elektronischen Objekt (CP) wie eine Mikrocontrollerkarte, einem Terminal (TE), das an einem Datenübertragungsnetz (RT) angeschlossen ist und mit einem Mittel, um mit dem tragbaren elektronischen Objekt (CP) zu kommunizieren, wobei das tragbare elektronische Objekt ein Beschreibungsmittel (DAP) umfasst, um eine aus mehreren verteilten ausgelagerten und am Terminal über das Datenübertragungsnetz (RT) zugänglichen Elementen (CA, CX) bestehende Applikation-zu beschreiben, sowie ein Verarbeitungsmittel (PI) für die Installation der Applikation auf dem Terminal (TE) für ihre Ausführung durch das Terminal, je nach dem Beschreibungsmittel der Applikation,
**dadurch gekennzeichnet, dass** das Beschreibungsmittel (DAP) mindestens einen in dem Deskriptor (DAP) der genannten Applikation enthaltenen Prioritätsindikator umfasst, der anhand von persönlichen Daten des Benutzers erzeugt wird, um mindestens ein Element als übergeordnetes Element der Applikation zu wählen, und dass das Mittel für die Installation der Applikation nur die übergeordneten Elemente umsetzt, bevor die Ausführung der installierten Applikation auf dem Terminal (TE) ausgelöst wird
